# EUROPÄISCHE PATENTSCHRIFT

(11) **EP 1 086 934 B1**
(45) Veröffentlichungstag und Bekanntmachung des Hinweises auf die Patenterteilung: **04.01.2006**
(21) Anmeldenummer: 00117049.7
(22) Anmeldetag: 09.08.2000
(51) Int. Cl.: C04B 28/02, C04B 24/26

(54) **Zementzusammensetzungen, enthaltend redispergierbare Polymerisatpulver**
Cementitious compositions comprising redispersable polymer powders
Compositions de ciment comprenant des poudres polymères redispersibles

(30) Priorität: 04.09.1999 DE 19942301
(43) Veröffentlichungstag der Anmeldung: 28.03.2001
(73) Patentinhaber: BASF Aktiengesellschaft, 67056 Ludwigshafen (DE)
(72) Erfinder: Dreher, Stefan, Dr, 67433 Neustadt (DE); Pakusch, Joachim, Dr., 67346 Speyer (DE); Sandor, Mario, Dr., 67549 Worms (DE); Reck, Bernd, Dr., 67269 Grünstadt (DE); Wood, Claudia, Dr., 69469 Weinheim (DE); Denu, Hans-Jurgen, 67159 Friedelsheim (DE)

(56) Entgegenhaltungen:
- EP-A- 0 931 776
- GB-A- 1 357 391
- US-A- 4 200 563
- US-A- 5 661 206

## Beschreibung

Das vorliegende Patent betrifft Zusammensetzungen auf Basis von Zement, enthaltend 1 bis 500 Gewichtsteile, bezogen auf 100 Gewichtsteile Zement, eines Polymerisats, aufgebaut aus
a) 30 - 99,5 Gew.-% mindestens eines Alkylesters der (Meth)acrylsäure,
b) 0 - 70 Gew.-% mindestens eines Vinylaromaten,
c) 0,5 - 10 Gew.-% mindestens eines Alkylpolyethoxy(meth)-acrylats der Formel 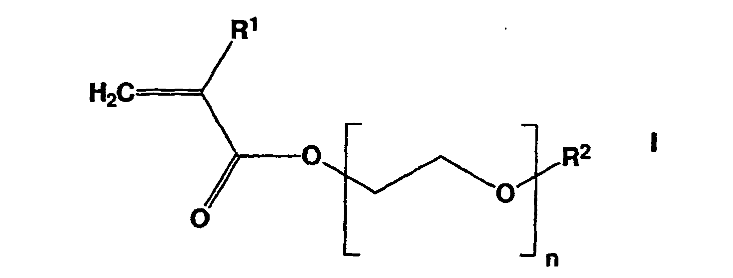
   wobei R1 für eine H-Atom oder eine Methylgruppe , R2 für eine C1 bis C4 Alkylgruppe und n für eine ganze Zahl von 1 bis 55 steht.
d) 0 - 10 Gew.-% mindestens einer ethylenisch ungesättigten Mono- oder Dicarbonsäuren, deren Anhydride, Amide oder Hydroxyalkylamide,
e) 0 - 10 Gew.-% Acrylnitril oder Methacrylnitril, und
f) 0 - 50 Gew.-% weiteren, von a) bis e) verschiedenen ethylenisch ungesättigten Verbindungen.

Die Eigenschaften von hydraulischen Bindemitteln, insbesondere Zement, können durch Zusatz von synthetischen Polymerisaten verbessert werden. Gewünscht ist eine Erhöhung der Flexibiltät der Bindemittel, was zu einem verbesserten Rißüberbrückungsvermögen und folglich zu einer verbesserten Frost-Tau-Beständigkeit führt. Darüberhinaus bewirken Polymer-Zusätze in der Regel ein verringertes Eindringen von Wasser sowie eine verbesserte Haftung auf verschiedenen Untergründen.

Geeignet sind Polymerisate, welche dem Zement in Pulverform zugemischt werden und nach Zusatz von Wasser in wäßriger Dispersion vorliegen. Die Gegenwart von Zement wirkt sich jedoch nachteilig auf die Stabilität der wäßigen Dispersion aus und führt zu Koagulatbildung. Die Polymerisate müssen daher eine möglichst hohe Elektrolytstabilität aufweisen.

Ein Möglichkeit zur Erhöhung der Elektrolytstabilität von Polymerdispersionen ist die Copolymerisation mit oberflächenaktiven Monomeren.

Die Verwendung von Polymer-Dispersionen, welche oberflächenaktive Monomere im Polymerisat enthalten, als Zusatz für zementäre Materialien ist in DE-A-2051569 beschrieben. Genannt werden unter anderem auch Ester von Carbonsäuren mit Polyalkylenoxiden.

In JP-53126093 werden Polymer-Dispersionen beschrieben, die ethoxylierte (Meth)acrylate enthalten können. Der Ethoxylierungsgrad des (Meth)acrylats beträgt 4 bis 30, als Endgruppe trägt die Ethylenoxid-Kette eine Hydroxyl-, Methyl- oder Alkylarylgruppe. Als Verwendung wird unter anderem auch der Zusatz zu Zement genannt.

In JP-10195312 werden ebenfalls Polymer-Dispersionen beschrieben, die mit Hydroxylgruppen terminierte, alkoxylierte (Meth)acrylate enthalten können. Die Polymerisate werden als Zusatz für Zement verwendet.

JP-08217808 beschreibt Polymer-Dispersionen mit mehrphasigen Latexteilchen und deren Mischungen mit Zement. Die Schale der Latexteilchen besteht aus einem Copolymerisat, das 0,05 bis 70 % eines ethoxylierten (Meth)acrylats enthält. In den Beispielen wird Polyethylenglycolmonomethacrylat verwendet.

Die Mitverwendung der oben beschriebenen alkoxylierten (Meth)acrylsäure-Derivate als Comonomere führt im allgemeinen zu einer ausreichenden Elektrolytstabilität der Polymerisate. Nachteilig ist jedoch vielfach ein verstärkt auftretende Koagulatbildung in den Polymer-Dispersionen. Durch die verstärkte Koagulatbildung wird die Filtration und Sprühtrocknung der Dispersionen erschwert. Ein weiterer Nachteil ist eine mit der Verwendung der alkoxylierten (Meth)acrylsäure-Derivate verbundene Viskositätserhöhung, welche vielfach nach Zugabe zur wäßrigen Zementschlämme auftritt. Schließlich wird bei Verwendung größerer Mengen alkoxylierter (Meth)acrylsäure-Derivate häufig eine starke Festigkeitsabnahme der mit dem Polymerisat-modifizierten Zement-Materialien beobachtet.

In US-5661206 und in EP-A-931776 werden Copolymere aus Alkoxypolyalkoxy(meth)acrylaten und ungesättigten Carbonsäuren beschrieben. Die Copolymere werden in wasserreduzierenden Zusammensetzungen für Zementmischungen eingesetzt. Dadurch werden bereits mit wenig Wasser ausreichend fließfähige Zementmischungen erhalten, die schneller trocknen können.

Die in US-5661206 beschriebenen Copolymere verhindern zusätzlich ein übermäßiges Einschleppen von Luft beim Mischen. Die Konzentration der wasserreduzierenden Zusammensetzungen in der Zementmischung beträgt vorzugsweise 0,02 bis 0,5 Gew.-%.

Die in EP-A-931776 beschriebenen Copolymere erhöhen zusätzlich die Temperaturstabilität der zementartigen Zubereitungen. Die Konzentration der wasserreduzierenden Zusammensetzungen in der Zementmischung beträgt vorzugsweise 0,05 bis 1,0 Gew.-%.

Aufgabe der vorliegenden Erfindung waren demzufolge mit Polymerisaten modifizierte Zementzusammensetzungen, in denen das Polymerisat eine ausreichende Elektrolytbeständigkeit hat. Die als Zusatz verwendete Polymerisat Dispersion soll einen möglichst geringen Koagulatanteil aufweisen und problemlos durch Sprühtrocknung in Pulverfrom zu überführen sein. Weiter ist eine möglichst gute Verträglichkeit und Verarbeitbarkeit mit Zement gewünscht. Die erhärteten Polymer-Zement-Zubereitungen sollen eine hohe Festigkeit bei ausreichender Flexibilität zeigen.

Demgemäß wurden die oben definierten Zusammensetzungen und die Verwendung der Zusammensetzungen gefunden.

Die erfindungsgemäßen Zusammensetzungen enthalten 1 bis 500, bevorzugt 5 bis 250 Gewichtsteile, besonders bevorzugt 10 bis 150 Gewichtsteile, bezogen auf 100 Gewichtsteile Zement, des in Anspruch 1 definierten Polymerisats.

Bevorzugt enthält das Polymerisat mindestens 0,8, besonders bevorzugt mindestens 1 Gew % des ethoxylierten Monomeren der Formel I (Monomer c). Im allgemeinen enthält das Polymerisat nicht mehr als 8 Gew%, besonders bevorzugt nicht mehr als 5 Gew.-% und ganz besonders bevorzugt nicht mehr als 4 Gew.-% des Monomeren c), bezogen auf das Polymerisat.

Bevorzugt setzt sich das Polymerisat wie folgt zusammen aus
a) bevorzugt 40 - 99 Gew %, besonders bevorzugt 50 bis 98 Gew.-% mindestens eines Alkylesters der (Meth)acrylsäure,
b) 0 - 65 Gew.-%, besonders bevorzugt 0 bis 60 Gew.-% mindestens eines Vinylaromaten,
c) 0,8 - 8 Gew.-%, besonders bevorzugt 1 bis 5 Gew.-% mindestens eines Alkylpolyethoxy(meth)acrylats der Formel I,
d) 0,1 - 5 Gew.-%, besonders bevorzugt 0,3 bis 4 Gew.-% mindestens einer ethylenisch ungesättigten Mono- oder Dicarbonsäuren,
e) 0 - 8, besonders bevorzugt 0 -6 Gew.-% Acrylnitril oder Methacrylnitril und
f) 0 - 40 Gew.-%, besonders bevorzugt 0 - 30. Gew.-% weiteren, von a) bis e) verschiedenen ethylenisch ungesättigten Verbindungen

Bei den Alkylestern der (Meth)acrylsäure (Monomere a) handelt es sich bevorzugt um C1 bis C18, besonders bevorzugt um C1 bis C8 Alkyl(meth)acrylate, z.B. Methyl(meth)acrylat, Ethyl(meth)-acrylat, n-Butyl(meth)acrylat, iso-Butyl(meth)acrylat, tert-Butyl(meth)acrylat, 2-Ethylhexyl (meth)acrylat. Besonders bevorzugt sind Methylmethacrylat, n-Butylacrylat, Ethylacrylat und 2-Ethylhexylacrylat.

Bei den Vinylaromaten (b) handelt es sich insbesondere um α-Methylstyrol und Styrol.

Bevorzugte Alkylpolyethoxy(meth)acrylate der Formelschema (I) (Monomere c) sind solche in denen R2 für Methyl steht und n für eine ganze zahl von 5 bis 50, besonders bevorzugt 5 bis 30 steht.

Geeignete ethylenisch ungesättigte Mono-oder Dicarbonsäuren, Anhydride oder Amide (d) sind z.B. Acrylsäure, Methacrylsäure, Maleinsäure, Itakonsäure, deren Amide wie Acrylamid oder Methacrylamid oder deren Hydroxyalkylamide wie Methylol(meth)acrylamid. Besonders bevorzugt sind Acrylsäure und Methacrylsäure.

Weitere Monomere (f) sind z. B. vernetzende Monomere,, wie Divinylbenzol, α-Ethylstyrol, Butandioldiacrylat, Ethyldiglykoldiacrylat, Hexandioldiacrylat, Ureidoethylmethacrylat, Ureidoethylmethacrylamid, Allylmethacrylat, 3-Methacryloxypropyltrimethoxysilan, Acetacetoxyethylmethacrylat, Diacetonacrylamid, Acrylamidoglykolsäure oder Methylacrylamidoglycolatmethylether. Der Anteil vernetzender Monomere liegt, falls eingesetzt, im allgemeinen unter 5 Gew.-%.

Die Glasübergangstemperatur des Polymeren beträgt bevorzugt -60 bis 50°C, insbesondere beträgt sie -60 bis +30°C, besonders bevorzugt -30 bis +40°C.

Die Glasüberganstemperatur des Polymerisats läßt sich nach üblichen Methoden wie Differentialthermoanalyse oder Differential Scanning Calorimetrie (s. z. B. ASTM 3418/82, sog. "midpoint temperature") bestimmen.

Die Herstellung des Polymeren erfolgt vorzugsweise durch Emulsionspolymerisation, es handelt sich daher um ein Emulsionspolymerisat.

Die Herstellung kann jedoch z. B. auch durch Lösungspolymerisation und anschließende Dispergierung in Wasser erfolgen.

Bei der Emulsionspolymerisation werden ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewicht im Unterschied zu den Schutzkolloiden üblicherweise unter 2000 g/mol liegen. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Vorzugsweise werden anionische und nichtionische Emulgatoren als grenzflächenaktive Substanzen verwendet. Gebräuchliche begleitende Emulgatoren sind z. B. ethoxylierte Fettalkohole (EO-Grad: 3 bis 50, Alkylrest: C₈-bis C₃₆), ethoxylierte Mono-, Di- und Tri-Alkylphenole (EO-Grad: 3 bis 50, Alkylrest: C₄- bis C₉), Alkalimetallsalze von Dialkylestern der Sulfobernsteinsäure sowie Alkali- und Ammoniumsälze von Alkylsulfaten (Alkylrest: C₈- bis C₁₂), von ethoxylierten Alkanolen (EO-Grad: 4 bis 30, Alkylrest: C₁₂- bis C₁₈), von ethoxylierten Alkylphenolen (EO-Grad: 3 bis 50, Alkylrest: C₄- bis C₉), von Alkylsulfonsäuren (Alkylrest: C₁₂- bis C₁₈) und von Alkylarylsulfonsäuren (Alkylrest: C₉- bis C₁₈).

Weitere geeignete Emulgatoren sind Verbindungen der allgemeinen Formel II 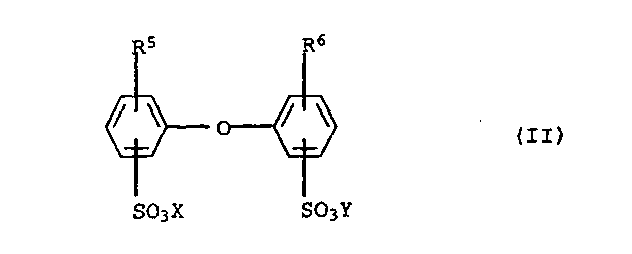
worin R⁵ und R⁶ Wasserstoff oder C₄- bis C₁₄-Alkyl bedeuten und nicht gleichzeitig Wasserstoff sind, und C und Y Alkalimetallionen und/oder Ammoniumionen sein können. Vorzugsweise bedeuten R⁵, R⁶ lineare oder verzweigte Alkylreste mit 6 bis 18 C-Atomen oder Wasserstoff und insbesondere mit 6, 12 und 16 C-Atomen, wobei R⁵ und R⁶ nicht beide gleichzeitig Wasserstoff sind. X und Y sind bevorzugt Natrium, Kalium oder Ammoniumionen, wobei Natrium besonders bevorzugt ist. Besonders vorteilhaft sind verbindungen II in denen X und Y Natrium, R⁵ ein verzweigter Alkylrest mit 12 C-Atomen und R⁶ Wasserstoff oder R⁵ ist. Häufig werden technische Gemische verwendet, die einen Anteil von 50 bis 90 Gew.-% des monoalkylierten Produktes aufweisen, beispielsweise Dowfax® 2A1 (Warenzeichen der Dow Chemical Company).

Geeignete Emulgatoren finden sich auch in Houben-Weyl, Methoden der organischen Chemie, Band 14/1, Makromolekulare Stoffe, Georg Thieme Verlag, Stuttgart, 1961, Seiten 192 bis 208.

Handelsnamen von Emulgatoren sind z. B. Dowfax®2 A1, Emulan® NP 50, Dextrol® OC 50, Emulgator 825, Emulgator 825 S, Emulan® OG, Texapon®NSO, Nekanil® 904 S, Lumiten® I-RA, Lumiten E 3065, Disponil FES 77, Lutensol AT 18, Steinapol VSL, Emulphor NPS 25.

Bei der grenzflächenaktiven Substanz handelt es sich bevorzugt um einen alkoxylierten, vorzugsweise ethoxylierten und/oder propoxylierten Emulgator oder Schutzkolloid. Bevorzugt ist insbesondere ein alkoxylierter Emulgator. Als niedermolekulare anionische oder nicht-ionische alkoxylierte Emulgatoren seien zum Beispiel Alkylphenylpolyethoxylsulfonate oder -sulfate, Alkyl oder Alkenylpolyethoxysulfate oder -sulfonate, Alkylglycerylpolyethoxysulfonate, ethoxylierte Sulfobernsteinsäurehalb- und diester, Alkyl-, Alkenyl oder Dialkylpolyethoxyphosphate, ethoxylierte ein- und mehrfach kernsulfonierte Mono- oder Dialkylalkylbiphenylether, ethoxylierte α-Sulfofettsäureester, ethoxylierte Fettsäuremonoglyceride oder Fettsäurealkanolaminsulfate, ethoxylierte Fettsäureester oder Fettsäuresarkoside, -glykolate, -lactate, -tauride oder -isothionate, Alkylphenylpolyethoxylate oder -propoxylate, Alkyl- oder Alkenylethoxylate oder -propoxylate, Polyalkylenoxidaddukte wie Ethylenoxid/Propylenoxid-Blockcopolymerisate, Fettsäurealkylolamidooxethylate sowie ethoxylierte Fettsäure, Fettamine, Fettsäureamide oder Alkansulfonamide genannt.

Besonders bevorzugt sind Alkylphenylpolyethoxysulfonate oder -sulfate, Alkyl oder Alkenylpolyethoxysulfonate oder -sulfate, Alkylphenylpolyethoxylate oder -propoxylate sowie Polyalkylenoxidaddukte wie zum Beispiel Ethylenoxid/Propylenoxid-Blockcopolymerisate.

Die grenzflächenaktive Substanz wird üblicherweise in Mengen von 0,1 bis 20 Gew.-Teilen, bevorzugt 0,5 bis 10 Gew.-Teilen, bezogen auf 100 Gew.-Teile des zu polymerisierenden Monomeren verwendet.

Die erhaltene Polymerdispersion und auch das im Fall der späteren Trocknung, z.B. Sprühtrocknung erhaltene Polymerpulver weisen daher einen entsprechenden Gehalt der oberflächenaktiven Substanz auf.

Wasserlösliche Initiatoren für die Emulsionspolymerisation sind z. B. Ammonium- und Alkalimetallsalze der Peroxidischwefelsäure, z. B. Natriumperoxodisulfat, Wasserstoffperoxid oder organische Peroxide, z. B. tert-Butylhydroperoxid oder wasserlösliche Azoverbindungen.

Geeignet sind insbesondere sogenannte Reduktions-Oxidations(Red-Ox)-Initiator Systeme.

Die Red-Ox-Initiator-Systeme bestehen aus mindestens einem meist anorganischen Reduktionsmittel und einem anorganischen oder organischen Oxidationsmittel.

Bei der Oxidationskomponente handelt es sich z. B. um die bereits vorstehend genannten Initiatoren für die Emulsionspolymerisation.

Bei der Reduktionskomponenten handelt es sich z. B. um Alkalimetallsalze der schwefligen Säure, wie z. B. Natriumsulfit, Natriumhydrogensulfit, Alkalisalze der Dischwefligen Säure wie Natriumdisulfit, Bisulfitadditionsverbindungen aliphatischer Aldehyde und Ketone, wie Acetonbisulfit oder Reduktionsmittel wie Hydroxymethansulfinsäure und deren Salze, oder Ascorbinsäure. Die Red-Ox-Initiator-Systeme können unter Mitverwendung löslicher Metallverbindungen, deren metallische Komponente in mehreren Wertigkeitsstufen auftreten kann, verwendet werden.

Übliche Red-Ox-Initiator-Systeme sind z. B. Ascorbinsäure/Eisen(II)sulfat/Natriumperoxidisulfat, tert-Butylhydroperoxid/Natriumdisulfit, tert-Butylhydroperoxid/Na-Hydroxymethansulfinsäure. Die einzelnen Komponenten, z. B. die Reduktionskomponente, können auch Mischungen sein z.B. eine Mischung aus dem Natriumsalz der Hydroxymethansulfinsäure und Natriumdisulfit.

Die genannten Verbindungen werden meist in Form wäßriger Lösungen eingesetzt, wobei die untere Konzentration durch die in der Dispersion vertretbare Wassermenge und die obere Konzentration durch die Löslichkeit der betreffenden Verbindung in Wasser bestimmt ist. Im allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im allgemeinen 0,1 bis 10 Gew.-%, bevorzugt 0,5 bis 5 Gew.-%, bezogen auf die zu polymerisierenden Monomeren. Es können auch mehrere, verschiedene Initiatoren bei der Emulsionspolymerisation Verwendung finden.

Bei der Polymerisation können Regler eingesetzt werden, z. B. in Mengen von 0 bis 0,8 Gew.-Teile, bezogen auf 100 Gew.-Teile der zu polymerisierenden Monomeren, durch die die Molmasse verringert wird. Geeignet sind z. B. Verbindungen mit einer Thiolgruppe wie tert.-Butylmercaptan, Thioglycolsäureethylacrylester, Mercaptoethynol, Mercaptopropyltrimethoxysilan oder tert.-Dodecylmercaptan.

Die Emulsionspolymerisation erfolgt in der Regel bei 30 bis 130, vorzugsweise 50 bis 95°C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozeß als auch in Form eines Zulaufverfahrens, einschließich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren in reiner oder in emulgierter Form enthalten, kontinuierlich, stufenweise oder unter Überlagerung eines Konzentrationsgefälles unter Aufrechterhaltung der Polymerisation der Polymerisationszone zuführt. Bei der Polymerisation kann auch z. B. zur besseren Einstellung der Teilchengröße eine Polymersaat vorgelegt werden.

So kann es insbesondere vorteilhaft sein, das ethoxylierte (Meth)acrylsäure-Derivat nicht bereits zu Beginn sondern erst im Verlauf der Emulsionspolymerisation zuzudosieren.

Die Art und Weise, in der der Initiator im Verlauf der radikalischen wäßrigen Emulsionspolymerisation dem Polymerisationsgefäß zugegeben wird, ist dem Durchschnittsfachmann bekannt. Es kann sowohl vollständig in das Polymeristionsgefäß vorgelegt, als auch nach Maßgabe seines Verbrauchers im Verlauf der radikalischen wäßrigen Emulsionspolymerisation kontinuierlich oder stufenweise eingesetzt werden. Im einzelnen hängt dies von der chemischen Natur des Initiatorsystems als auch von der Polymersiationstemperatur ab. Vorzugsweise wird ein Teil vorgelegt und der Rest nach Maßgabe des Verbrauchs der Polymerisationszone zugeführt.

Zur Entfernung der Restmonomeren wird üblicherweise auch nach dem Ende der eigentlichen Emulsionspolymerisation, d. h. nach einem Umsatz der Monomeren von mindestens 95 %, Initiator zugesetzt.

Die einzelnen Komponenten können dem Reaktor beim Zulaufverfahren von oben, in der Seite oder von unten durch den Reaktorboden zugegeben werden.

Bei der Emulsionspolymerisation werden wäßrige Dispersionen des Polymeren in der Regel mit Feststoffgehalten von 15 bis 75 Gew.-%, bevorzugt von 40 bis 75 Gew.-% erhalten.

Für eine hohe Raum/Zeitausbeute des Reaktors sind Dispersionen mit einem möglichst hohen Feststoffgehalt bevorzugt. Um Feststoffgehalte > 60 Gew.-% erreichen zu können, sollte man eine bioder polymodale Teilchengröße einstellen, da sonst die Viskosität zu hoch wird, und die Dispersion nicht mehr handhabbar ist. Die Erzeugung einer neuen Teilchengeneration kann beispielsweise durch Zusatz von Saat (EP 81083), durch Zugabe überschüssiger Emulgatormengen oder durch Zugabe von Miniemulsionen erfolgen. Ein weiterer Vorteil, der mit der niedrigen Viskosität bei hohem Feststoffgehalt einhergeht, ist das verbesserte Beschichtungsverhalten bei hohen Feststoffgehalten. Die Erzeugung einer neuen/neuer Teilchengeneration/en kann zu einem beliebigen Zeitpunkt erfolgen. Er richtet sich nach den für eine niedrige Viskosität angestrebten Teilchengrößenverteilung.

Das Polymerisat wird dem Zement vorzugsweise in Form eines Pulvers beigemischt.

Das Polymerisatpulver ist vorzugsweise in Wasser dispergierbar (im Falle der Herstellung des Polymerisats durch Emulsionspolymerisation auch Redispergierbarkeit in Wasser genannt).

Nach der Emulsionspolymerisation liegt das Polymerisat in Form einer wäßrigen Dispersion von Polymerisat-partikeln vor.

Die mittlere Teilchengröße der Partikel beträgt vorzugsweise 50 bis 500 nm, besonders bevorzugt 80 bis 300 nm. Die Viskosität der Polymerdispersionen liegt vorzugsweise im Bereich von 1 bis 1000 mPas, bevorzugt von 10 bis 400 mPas (bei einem Feststoffgehalt von 40 Gew.-%), gemessen mit einem Rotationsviskosimeter gemäß DIN 53019 bei 23°C und einer Schergeschwindigkeit von 250 s⁻¹.

Aus wäßrigen Polymerisatdispersionen können die redispergierbaren Polymerpulver durch Trocknungsverfahren, insbesondere Sprühtrocknung erhalten werden.

Zur Sprühtrocknung können die wäßrigen Polymerdispersionen auch Trocknungshilfsmittel, z.B. Polyvinylhydresol oder Formaldehyd-Naphthalinsulfonsäure-Kondensate zugesetzt werden.

Üblicherweise erfolgt die Sprühtrocknung in einem Trockenturm.

In der Regel wird die Sprühtrocknung der wäßrigen Polymerisatdispersion bei einer Eingangstemperatur T_{E} des Warmluftstroms von 100 bis 200°C, vorzugsweise 120 bis 160°C, und einer Ausgangstemperatur T_{A} des Warmluftstroms von 30 bis 90°C, vorzugsweise 50 bis 90°C durchgeführt. Das Versprühen der wäßrigen Polymerisatdispersion im Warmluftstrom kann dabei z.B. mittels Ein- oder Mehrstoffdüsen oder über eine rotierende Scheibe erfolgen. Die Abscheidung der Polymerisatpulver erfolgt normalerweise unter Verwendung von Zyklonen oder Filterabscheidern. Die versprühte wäßrige Polymerisatdispersion und der Warmluftstrom werden vorzugsweise parallel geführt. Häufig wird während des Sprühtrockenvorgangs im Turm noch ein feinteiliges mineralisches AntiBlockmittel zudosiert (z.B. feinteiliges Kieselgel), das insbesondere ein Verklumpen der bei der Sprühtrocknung anfallenden sekundären Polymerisatteilchen während einer längeren Lagerung des erfindungsgemäß resultierenden Polymerisatpulvers unterbindet.

Das in Wasser dispergierbare, bzw. redispergierbare Polymerisat kann jederzeit, d.h. sofort oder auch erst kurz von der Anwendung mit Zement in den eingangs genannten Mengen gemischt werden.

Bei dem Zement kann es sich um Hochofenzement, Ölschieferzement, Portlandzement, hydrophobierter Portlandzement, Schnellzement, Quellzement oder Tonerdezement handeln, wobei sich die Verwendung von Portlandzement als besonders günstig erweist.

Als weitere Bestandteile neben Zement und Polymer-Dispersion können die erfindungsgemäßen Zusammensetzungen noch weitere optionale Bestandteile enthalten, wie zum Beispiel mineralische Zuschläge, wie Sand, Kies, Silika, Mikrosilika, Kalk, Kreide, Gips, Lehm, Ton und auch Entschäumer, Verflüssiger, Fließmittel, Abbindeverzögerer oder -beschleuniger. üblicherweise wird die erfindungsgemäße Zusammensetzung mit Wasser vermengt und danach verarbeitet.

Die Zusammensetzungen eignen sich z.B. als Reparatur- oder Armierungsmörtel, sowie als Fliesenkleber, Dichtungsmasse, Beschichtungsmasse oder Spachtelmasse.

Die erfindungsgemäßen Zementzusammensetzungen zeichnen sich durch eine hohe Elektrolytstabilität des Polymerisats in Gegenwart von Zement aus. Die Polymerisatdispersion als solche enthält kaum Koagulat und läßt sich leicht in Pulverform überführen, z.B. sprühtrocknen.

In wäßrigen Zementzusammensetzungen zeigen die Polymerisatdispersionen eine gute Mischbarkeit und führen so zu einer guten Verarbeitung. Es werden homogene Zement-Schlämme erhalten, die kein Sedimentieren ("Ausbluten") zeigen und eine geringe Werkzeugklebrigkeit aufweisen. Die Verarbeitungsdauer ("Offene Zeit") der wäßrigen Zementzusammensetzungen ist ausreichend lang. Sie beträgt bei üblichen Formulierungen mehr als 15 Minuten, in der Regel mehr als 30 Minuten.

In den erhärteten zementären Massen bewirkt der Zusatz des Polymerisats eine starke Flexibilisierung des Materials sowie eine erhöhte Haftung auf mineralischen Untergründen. Polymerrreiche Zusammensetzungen mit mehr als 20 Gew.-% Polymer bezogen auf die mineralischen Komponenten ergeben hochflexible, wasserfeste Filme von hoher Kohäsion.

### Patentbeispiele

### 1. Herstellung der erfindungsgemäßen Polymer-Dispersionen

Im folgenden wird in Form einiger Beispiele und Vergleichsbeispiele die Herstellung erfindungsgemäßer Polymer-Dispersionen und Polymer-modifizierter Zementschlämmen beschrieben.

Die nichtflüchtigen Anteile (Feststoffgehalt) wurden in einem Umluft-Trockenschrank bestimmt aus dem Gewichtsverlust einer 1 g-Probe, die zwei Stunden bei 120°C getrocknet wurde. Die Viskosität der Proben wurde mit Hilfe eines Rotationsviskosimeters (Rheomat) der Fa. Paar Physica bei einer Schergeschwindigkeit von 250⁻¹ gemäß DIN 53019 bei 23°C bestimmt. Zur Messung des pH-Wertes wurde eine handelsübliche Einstabmeßkette (Fa. Schott Typ Handylab 1) verwendet.

### Beispiel 1

In einem 2 1 Glasgefäß mit Ankerrührer (120 Upm) wurden 230 g vollentsalztes Wasser und 5,5 g von Lutensol AT 18 vorgelegt. Bei einer Innentemperatur von 85°C wurden 5 Gew.-% der Gesamtmenge eines Zulaufs 1 und 10 Gew% der Gesamtmenge eines Zulaufs 2 zugegeben. Die Reaktionsmischung wurde 10 min bei 85°C anpolymerisiert. Anschließend wurden bei 85°C innerhalb von 3,5 h die Restmenge von Zulauf 1 und 2 räumlich getrennt kontinuierlich zugeführt. Nach einer Nachpolymerisation von 30 Minuten wurde abgekühlt und mit einer verdünnten wäßrigen Ca(OH)₂-Lösung neutralisiert. Die so hergestellte Polymer-Dispersion enthält 50,2% nichtflüchtige Anteile und hat einen pH-Wert von 7,2. Die Viskosität beträgt 54 mPas. Das enthaltene Copolymerisat besitzt eine Glasübergangstemperatur von -25°C.

### Zulauf 1:

| | |
|---|---|
| 136 g | vollentsalztes Wasser |
| 36,7 g | Disponil FES 77 (30 Gew.-%ige wäßrige Lösung eines Alkylpolyethoxysulfates der Fa. Henkel) |
| 27,5 g | Lutensol AT 18 (eine 20 Gew.-%igen wäßrige Lösung eines ethoxylierten Fettalkohols (Fa. BASF)) |
| 385 g | 2-Ethylhexylacrylat |
| 165 g | Styrol |
| 11,0 g | Bisomer MPEG350MA (Methylpolyglycolmethacrylat der Fa. INSPEC mit einem mittleren Ethoxylierungsgrad von 8) |
| 5,5 g | Methacrylsäure |

### Zulauf 2:

| | |
|---|---|
| 100 g | vollentsalztes Wasser |
| 3,3 g | Natriumperoxodisulfat |

### Beispiel 2

In einem 2 l Glasgefäß mit Ankerrührer (120 Upm) wurden 230 g vollentsalztes Wasser und 5,5 g von Lutensol AT 18 vorgelegt. Bei einer Innentemperatur von 85°C wurden 5 Gew.-% der Gesamtmenge eines Zulaufs 1 und 10 Gew% der Gesamtmenge eines Zulaufs 2 zugegeben. Die Reaktionsmischung wurde 10 min bei 85°C anpolymerisiert. Anschließend wurden bei 85°C innerhalb von 3,5 h die Restmenge von Zulauf 1 und 2 räumlich getrennt kontinuierlich zugeführt. Nach einer Nachpolymerisation von 30 Minuten wurde abgekühlt und mit einer verdünnten wäßrigen Ca(OH)₂-Lösung neutralisiert. Die so hergestellte Polymer-Dispersion enthält 49,7% nichtflüchtige Anteile und hat einen pH-Wert von 7,0. Die Viskosität beträgt 39 mPas. Das enthaltene Copolymerisat besitzt eine Glasübergangstemperatur von +24°C.

### Zulauf 1:

| | |
|---|---|
| 138 g | vollentsalztes Wasser |
| 18,3 g | Disponil FES 77 |
| 8,3 g | Lutensol AT 18 |
| 275 g | n-Butylacrylat |
| 275 g | Styrol |
| 11,1 g | Bisomer S 10 W (Methylpolyglycolmethacrylat der Fa. |
| 5,5 g | INSPEC mit einem mittleren Ethoxylierungsgrad von 20) Methacrylsäure |

### Zulauf 2:

| | |
|---|---|
| 80 g | vollentsalztes Wasser |
| 3,3 g | Natriumperoxodisulfat |

### Beispiel 3

In einem 2 1 Glasgefäß mit Ankerrührer (120 Upm) wurden 230 g vollentsalztes Wasser und 5,5g Lutensol AT 18 vorgelegt. Bei einer Innentemperatur von 85°C wurden 5 Gew.-% der Gesamtmenge eines Zulaufs 1 und 10 Gew% der Gesamtmenge eines Zulaufs 2 zugegeben. Die Reaktionsmischung wurde 10 min bei 85°C anpolymerisiert. Anschließend wurden bei 85°C innerhalb von 3,5 h die Restmenge von Zulauf 1 und 2 räumlich getrennt kontinuierlich zugeführt. Nach einer Nachpolymerisation von 30 Minuten wurde abgekühlt und mit einer verdünnten wäßrigen Ca(OH)₂-Lösung neutralisiert. Die so hergestellte Polymer-Dispersion enthält 49,5% nichtflüchtige Anteile und hat einen pH-Wert von 7,3. Die Viskosität beträgt 38 mPas. Das enthaltene Copolymerisat besitzt eine Glasübergangstemperatur von -33°C.

### Zulauf 1:

| | |
|---|---|
| 138 g | vollentsalztes Wasser |
| 18,3 g | Disponil FES 77 |
| 8,3 g | Lutensol AT 18 |
| 468 g | n-Butylacrylat |
| 55 g | Ethylacrylat |
| 26 g | Acrylnitril |
| 22,0 g | Bisomer S 20 W (50 Gew.-%ige wäßrige Lösung eines Methyl-polyglycolmethacrylats der Fa. INSPEC mit einem mittleren Ethoxylierungsgrad von 45) |
| 5,5 g | Methacrylsäure |

### Zulauf 2:

| | |
|---|---|
| 80 g | vollentsalztes Wasser |
| 3,3 g | Natriumperoxodisulfat |

### Beispiel 4

In einem 2 1 Glasgefäß mit Ankerrührer (120 Upm) wurden 230 g vollentsalztes Wasser und 6 g Emulgator 825, einer 20 Gew.-%igen wäßrigen Lösung eines ethoxylierten Octylphenols (Fa. BASF) vorgelegt. Bei einer Innentemperatur von 85°C wurden 5 Gew.-% der Gesamtmenge eines Zulaufs 1 und 10 Gew% der Gesamtmenge eines Zulaufs 2 zugegeben. Die Reaktionsmischung wurde 10 min bei 85°C anpolymerisiert. Anschließend wurden bei 85°C innerhalb von 3,5 h die Restmenge von Zulauf 1 und 2 räumlich getrennt kontinuierlich zugeführt. Nach einer Nachpolymerisation von 30 Minuten wurde abgekühlt und mit einer verdünnten wäßrigen NH₃-Lösung neutralisiert. Die so hergestellte Polymer-Dispersion enthält 50,2 % nichtflüchtige Anteile und hat einen pH-Wert von 7,0. Die Viskosität beträgt 34 mPas. Das enthaltene Copolymerisat besitzt eine Glasübergangstemperatur von +12°C.

### Zulauf 1:

| | |
|---|---|
| 130 g | vollentsalztes Wasser |
| 22,5 g | Emulphor NPS 25 (35 Gew.-%ige wäßrige Lösung eines Nonyl-phenolpolyethoxysulfates der Fa. BASF) |
| 10,0 g | Emulgator 825 |
| 385 g | n-Butylacrylat |
| 155 g | Methylmethacrylat |
| 11,0 g | Acrylnitril |
| 11,0 g | Bisomer MPEG350MA |

### Zulauf 2:

| | |
|---|---|
| 80 g | vollentsalztes Wasser |
| 3,3 g | Natriumperoxodisulfat |

### Vergleichsbeispiel V-1 (ethoxyliertes-Methacrylat mit freier OH-Gruppe)

Diese Polymer-Dispersion wurde analog zu Beispiel 1 hergestellt. Dabei wurden jedoch die unten aufgeführten Zuläufe 1 und 2 verwendet. Die so hergestellte Polymer-Dispersion enthält 49,9 % nichtflüchtige Anteile und hat einen pH-Wert von 7,3. Die Viskosität beträgt 45 mPas. Das enthaltene Copolymerisat besitzt eine Glasübergangstemperatur von -22°C.

### Zulauf 1:

| | |
|---|---|
| 136 g | vollentsalztes Wasser |
| 36,7 g | Disponil FES 77 |
| 27,5 g | Lutensol AT 18 |
| 385 g | 2-Ethylhexylacrylat |
| 165 g | Styrol |
| 11,0 g | Bisomer PEM 6 E (Polyglycolmethacrylat der Fa. INSPEC mit einem mittleren Ethoxylierungsgrad von 6) |
| 5,5 g | Methacrylsäure |

### Zulauf 2:

| | |
|---|---|
| 100 g | vollentsalztes Wasser |
| 3,3 g | Natriumperoxodisulfat |

### Vergleichsbeispiel V-2 (ethoxyliertes-Methacrylat mit langer Alkylgruppe)

Diese Polymer-Dispersion wurde analog zu Beispiel 1 hergestellt. Dabei wurden jedoch die unten aufgeführten Zuläufe 1 und,2 verwendet. Die so hergestellte Polymer-Dispersion enthält 49,5 % nichtflüchtige Anteile und hat einen pH-Wert von 7,0. Die Viskosität beträgt 45 mPas. Das enthaltene Copolymerisat besitzt eine Glasübergangstemperatur von -24°C.

### Zulauf 1:

| | |
|---|---|
| 136 g | vollentsalztes Wasser |
| 36,7 g | Disponil FES |
| 27,5 g | Lutensol AT 18 |
| 385 g | 2-Ethylhexylacrylat |
| 165 g | Styrol |
| 11,0 g | eines C₁₆-C₁₈-Fettalkoholpolyethoxymethacrylats mit einem mittleren Ethoxylierungsgrad von 25) |
| 5,5 g | Methacrylsäure |

### Zulauf 2:

| | |
|---|---|
| 100 g | vollentsalztes Wasser |
| 3,3 g | Natriumperoxodisulfat |

### Vergleichsbeispiel V-3 (ohne ethoxyliertes-Methacrylat)

Diese Polymer-Dispersion wurde analog zu Beispiel 1 hergestellt. Dabei wurden jedoch die unten aufgeführten Zuläufe 1 und 2 verwendet. Die so hergestellte Polymer-Dispersion enthält 49,8 % nichtflüchtige Anteile und hat einen pH-Wert von 7,2. Die Viskosität beträgt 38 mPas. Das enthaltene Copolymerisat besitzt eine Glasübergangstemperatur von -20°C.

### Zulauf 1:

| | |
|---|---|
| 136 g | vollentsalztes Wasser |
| 37,0 g | Disponil FES 77 |
| 27,5 g | Lutensol AT 18 |
| 392 g | 2-Ethylhexylacrylat |
| 168 g | Styrol |
| 6,0 g | Methacrylsäure |

### Zulauf 2:

| | |
|---|---|
| 100 g | vollentsalztes Wasser |
| 3,3 g | Natriumperoxodisulfat |

In Tabelle 1 sind jeweils die Monomerzusammensetzung und Glasübergangstemperatur der Beispiele und Vergleichsbeispiele aufgeführt. Außerdem ist die Anzahl der EO-Einheiten und die Art der Endgruppe des jeweils verwendeten ethoxylierten Methacrylsäure-Derivats genannt.

**Tabelle 1: Monomerzusammensetzung und Glastemperatur (Tg) der Patentbeispiele**

| Probe | Monomere | EO-Grad | Endgruppe | Tg [°C] |
|---|---|---|---|---|
| 1 | 70 EHA | 8 | Methyl | -25 |
| | 30 S | | | |
| | 2 EO-Monomer¹ | | | |
| | 1 MAS | | | |
| 2 | 50 nBA | 20 | Methyl | +24 |
| | 50 Styrol | | | |
| | 2 EO-Monomer² | | | |
| | 1 MAS | | | |
| 3 | 85 nBA | 45 | Methyl | +21 |
| | 10 EA | | | |
| | 5 Acrylnitril | | | |
| | 2 EO-Monomer³ | | | |
| | 1. MAS | | | |
| 4 | 70 nBA | 8 | Methyl | -33 |
| | 28 MMA | | | |
| | 2 Acrylnitril | | | |
| | 2 EO-Monomer² | | | |
| V-1 | 70 EHA | 6 | Hydroxyl | -22 |
| | 30 S | | | |
| | 2 EO-Monomer⁴ | | | |
| | 1 MAS | | | |
| V-2 | 70 EHA | 25 | C₁₆-C₁₈-Alkyl | -24 |
| | 30 S | | | |
| | 2 EO-Monomer⁵ | | | |
| | 1 MAS | | | |
| V-3 | 70 EHA | ± | ± | -20 |
| | 30 S | | | |
| | 1 MAS | | | |

| | | | | |
|---|---|---|---|---|
| EO-Monomer¹ = Bisomer MPEG 350 MA | | | | |
| EO-Monomer² = Bisomer S 10 W | | | | |
| EO-Monomer³ = Bisomer S 20 W | | | | |
| EO-Monomer⁴ = Bisomer PEM 6 E | | | | |
| EO-Monomer⁵ = C₁₆-C₁₈-Fettalkoholpolyethoxymethacrylats (EO = 25) | | | | |

### 2. Stabilität der erfindungsgemäßen Polymer-Dispersionen

Die Wahl von Art und Menge des ethoxylierten Methacrylsäure-Derivats hat einen entscheidenden Einfluß auf die Stabilität der Polymer-Dispersionen. Als Parameter für die kolloidale Stabilität sind in Tabelle 2 der Koagulat- und Stippengehalt sowie die Elektrolytstabilität der Patentbeispiele und Vergleichsbeispiele aufgeführt. Der Koagulatgehalt wurde durch Filtration der Dispersion über ein Perlonsieb mit einer mittleren Maschenweite von 45 µm bestimmt. Zur Bestimmung des Anteils an Feinkoagulat (Stippen) wurde ein 200 µm-dicker Film der über 45 µm filtrierten Polymer-Dispersionen auf eine Glasplatte aufgezogen und nach vollständiger Trocknung auf eingeschlossene Feinkoagulatpartikel untersucht. Deren Gehalt wurde nach Schulnoten von sehr gut (kein Feinkoagulat) bis sehr schlecht (sehr viel Feinkoagulat) bewertet. Die Elektrolytstabilität wird bestimmt durch Zugabe weniger Tropfen Dispersion zu CaCl₂-Lösungen unterschiedlicher Konzentrationen, abgestuft in 0,5 Gew.-%-Schritten von 0,5 bis 5 Gew.-%. Angegeben in Tabelle 2 ist diejenige CaCl₂-Konzentration, bei der die jeweilige Dispersion noch stabil ist. Bei höheren Konzentrationen tritt Koagulation ein.

**Tabelle 2: Koagulat- und Stippengehalt sowie Elektrolytstabilität der Patentbeispiele**

| Probe | EO-Monomer | | Kolloidale Stabilität | | |
|---|---|---|---|---|---|
| | EO-Grad | Endgruppe | Koagulat [Gew.-%] | Stippengehalt [Note] | Elektrolytstabilität [Gew.-% CaCl₂] |
| 1 | 8 | Methyl | 0,03 | gut | 2 |
| 2 | 20 | Methyl | 0,01 | sehr gut | 3 |
| 3 | 45 | Methyl | 0,05 | gut | 3 |
| 4 | 8 | Methyl | 0,03 | gut | 2 |
| V-1 | 6 | Hydroxyl | 0,03 | gut | 2 |
| V-2 | 25 | C₁₆-C₁₈-Alkyl | 0,38 | befriedigend | 0,5 |
| V-3 | ± | ± | 0,27 | schlecht | < 0,5 |

Die in Tabelle 2 aufgeführten Ergebnisse machen deutlich, daß die erfindungsgemäßen Polymer-Dispersionen eine hohe Stabilität aufweisen. Der Anteil an Koagulat und Feinkoagulat ist gering, die Elektrolytstabilität (Stabilität in Gegenwart von Elektrolyten wie Zement) ist hoch. Die Verwendung eines ethoxylierten Methacrylsäure-Derivats ohne terminale Alkylgruppe führt zu vergleichbaren Stabilitäten. Wird jedoch kein ethoxyliertes Comonomer oder eines mit langer terminaler Alkylgruppe verwendet, weisen die erhaltenen Polymer-Dispersionen einen deutlich höheren Gehalt an Koagulat und Feinkoagulat auf, die Elektrolytstabilität ist geringer.

### 3. Sprühtrocknung der erfindungsgemäßen Polymer-Dispersionen

Die Polymer-Dispersionen aus Beispiel 1, V-1, V-2 und V-3 wurden in einer Technikumstrockner sprühgetrocknet. Als Sprühhilfsmittel wurde den Latices jeweils 10 Gew.-% (bezogen auf Polymer fest) Tamol SC 9422 (Naphthalinsulfonsäure-Formaldehyd-Kondensat der Fa. BASF) zugesetzt, als Rieselhilfsmittel diente Sipernat D 17 (Fa. Degussa). Der Feststoffgehalt der Sprühspeise betrug 30 Gew.-%. Die Zerstäubung erfolgte über eine Teflon-Zweistoffdüse (Spaltweite 1,3 mm), die Eingangstemperatur betrug 130°C, die Ausgangstemperatur 60°C.

Tabelle 3 zeigt die Ergebnisse der Sprühtrocknung. Offensichtlich lassen sich die Proben der Vergleichsbeispiele V-2 und V-3 nicht sprühtrocknen. Durch den hohen Feinkoagulat-Gehalt dieser Latices kam es auch nach Filtration über 45 µm zu einem Verstopfen der Zweistoffdüse. Somit konnten keine Pulver erhalten werden. Die erfindungsgemäße Polymer-Dispersion aus Beispiel 1 hingegen konnte ohne Probleme mit hoher Ausbeute sprühgetrocknet werden. Das erhaltene Pulver ist gut redispergierbar.

**Tabelle 3: Monomerzusammensetzung und Glastemperatur (Tg) der Patentbeispiele**

| Probe | EO-Monomer [Gew.-%] | EO-Grad | Endgruppe | Ausbeute [Gew.-%] | Bemerkung |
|---|---|---|---|---|---|
| 1 | 2 | 8 | Methyl | 71 | problemlos zu trocknen |
| V-1 | 2 | 6 | Hydroxyl | 68 | problemlos zu trocknen |
| V-2 | 2 | 25 | C₁₆-C₁₈-Alkyl | ± | Düse verstopft |
| V-3 | ± | ± | ± | ± | Düse verstopft |

### 4. Anwendung der Polymer-Dispersionen in zementären Baustoffen

Zur Beurteilung des Einflusses der erfindungsgemäßen Polymer-Dispersionen auf die Verarbeitbarkeit und die mechanischen Eigenschaften von zementären Baustoffen wurden wäßrige Polymer-Zement-Schlämmen gemäß der in Tabelle 4 aufgeführten Rezeptur hergestellt. Die Zusammensetzungen entsprechen einem gewichtsmäßigen Polymer-Zement-Verhältnis von 0,6. Durch Zugabe von vollentsalztem Wasser wurden die Schlämmen auf eine einheitliche Konsistenz eingestellt. Das Wasser-Zement-Verhältnis beträgt ca. 0,8. Aus diesen Schlämmen wurden mittels einer Rakel Filme mit einer Dicke von 2 mm (trocken) hergestellt. Die Filme wurden 28 Tage bei Normklima (23°C; 50 rel. Luftfeuchte) getrocknet.

**Tabelle 4: Zusammensetzung der Polymer-Zement-Schlämmen**

| | |
|---|---|
| Quarzsand (0 - 0,09 mm) | 20,5 g |
| Quarzsand (0,08 - 0,2 mm) | 22,5 g |
| Quarzsand (0,2 - 0,5 mm) | 30,0 g |
| Zement CEM I 42,5 R | 25,0 g |
| Lumiten E (Entschäumer; Fa. BASF) | 2,0 g |
| Polymer (fest) | 15,0 g |

Die Verarbeitbarkeit der wäßrigen Polymer-Zement-Schlämmen wurden nach Schulnoten von sehr gut bis sehr schlecht beurteilt. Dabei wurden die Homogenität der Schlämmen, ein eventuelles Sedimentieren der mineralischen Bestandteile ("Ausbluten"), die Werkzeugklebrigkeit sowie die Rauhigkeit der Oberfläche des gebildeten Filmes (Blasen, Mikrorisse) in Betracht gezogen. Die offene Zeit der Polymer-Zement-Schlämmen entspricht derjenigen Zeit, während der das Material nach Zusammengabe der Komponenten noch plastisch verformbar ist ohne Bildung von Rissen oder festen Partikeln. Die Messung von Reißkraft und Reißdehnung der Polymer-Zement-Filme erfolgt in Anlehnung an DIN 53455 an einem automatischen Materialprüfgerät mit einer Abzugsgeschwindigkeit von 100 mm/min.

**Tabelle 5: Monomerzusammensetzung und Glastemperatur (Tg) der Patentbeispiele**

| Probe | Verarbeitbarkeit [Note] | Offene Zeit [min] | Reißkraft [N/mm2] | Reißdehnung [%] | Bemerkung |
|---|---|---|---|---|---|
| 1 | Sehr gut | > 30 | 0,7 | 52 | homogener Film |
| 3 | Sehr gut | > 30 | 1,2 | 30 | homogener Film |
| V-1 | schlecht | < 10 | ± | ± | kein kohäsiver Film |
| V-2 | befriedigend | 10-20 | 0,4 | 28 | ± |
| V-3 | schlecht | < 5 | ± | ± | kein kohäsiver Film |

Die Polymer-Dispersionen führen offensichtlich zu Polymer-Zement-Schlämmen mit guter Verarbeitbarkeit und (erwünschter) langer offener Zeit. Die erhaltenen Polymer-Zement-Filme haben eine homogene Struktur und zeigen ein ausgewogenes Verhältnis von Festigkeit (Reißkraft) und Flexibilität (Reißdehnung). Die Probe V-1, enthaltend ein ethoxyliertes Methacrylsäure-Derivat ohne endständige Alkylgruppe; hingegen zeigt eine sehr schlechte Verarbeitung. Die Schlämme hat einen hohen Wasserbedarf zur Einstellung einer verarbeitungsfähigen Konsistenz und dickt sehr schnell an, hat also eine relativ kurze offene Zeit. Außerdem neigt die Schlämme zur Phasentrennung, d.h. die mineralischen Bestandteile sedimentieren. Dadurch zeigt der erhaltene Polymer-Zement-Film dieser Probe eine sehr unregelmäßige Oberfläche mit vielen Rissen und Blasen, mechanische Kennwerte können aufgrund zu geringer Kohäsion nicht bestimmt werden. Die Probe V-3 ohne ethoxyliertes Comonomer zeigt vergleichbar schlechte Eigenschaften. Die Probe V-2, enthaltend ein ethoxyliertes Methacrylsäure-Derivat mit endständige langer Alkylgruppe, zeigt in der Schlämme eine mäßige Verarbeitbarkeit. Die erhaltenen Polymer-Zement-Filme zeigen relativ zu den erfindungsgemäßen Proben eine vergleichbare Flexibilität, aber eine geringere Festigkeit (Reißdehnung).

## Patentansprüche

1. Zusammensetzungen auf Basis von Zement, enthaltend 1 bis 500 Gewichtsteile, bezogen auf 100 Gewichtsteile Zement, eines Emulsionspolymerisats, aufgebaut aus
a) 30 - 99,5 Gew.-% mindestens eines Alkylesters der (Meth)acrylsäure,
b) 0 - 70 Gew.-% mindestens eines Vinylaromaten,
c) 0,5 - 10 Gew.-% mindestens eines Alkylpolyethoxy(meth)acrylats der Formel 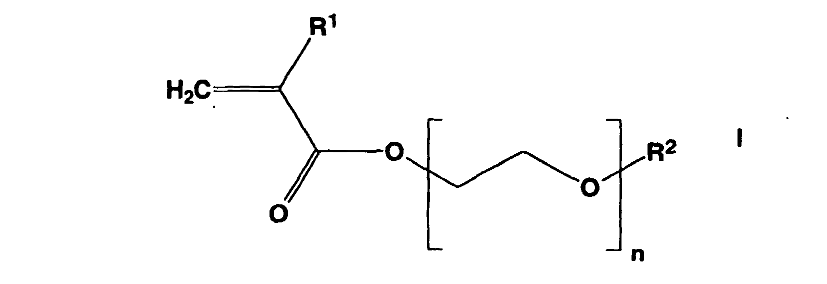
wobei R1 für eine H-Atom oder eine Methylgruppe , R2 für eine C1 bis C4 Alkylgruppe und n für eine ganze Zahl von 1 bis 55 steht.
d) 0 - 10 Gew.-% mindestens einer ethylenisch ungesättigten Mono- oder Dicarbonsäuren, deren Anhydride, Amide oder Hydroxyalkylamide,
e) 0 - 10 Gew.-% Acrylnitril oder Methacrylnitril, und
f) 0 - 50 Gew.-% weiteren, von a) bis e) verschiedenen ethylenisch ungesättigten Verbindungen, **dadurch gekennzeichnet, dass** bei der Emulsionspolymerisation ionische und/oder nichtionische Emulgatoren eingesetzt werden.

2. Zusammensetzung gemäß Anspruch 1, **dadurch gekennzeichnet, daß** R2 in Formel I für Methyl und n für eine ganze Zahl von 5 bis 50 steht.

3. Zusammensetzung gemäß einem der Ansprüche 1 bis 3, **dadurch gekennzeichnet, daß** die Zusammensetzung 0,1 bis 20 Gew-teile, bezogen auf 100 Gew.-teile Polymerisat, eines alkoxylierten Emulgatoren enthält.

4. Zusammensétzung gemäß einem der Ansprüche 1 bis 4, **dadurch gekennzeichnet, daß** die Glasübergangstemperatur (Tg) des Polymerisats -60 bis +30°C beträgt.

5. Zusammensetzung gemäß einem der Ansprüche 1 bis 5, **dadurch gekennzeichnet, daß** das Polymerisat in Form eines Pulvers vorliegt.

6. Zusammensetzung gemäß einem der Ansprüche 1 bis 6, **dadurch gekennzeichnet, daß** es sich um ein in Wasser redispergierbares Pulver handelt.

7. Verwendung der Zusammensetzungen gemäß einem der Ansprüche 1 bis 7 als Reperatur- oder Armierungsmörtel, als Fliesenkleber, Dichtungsmasse, Beschichtungsmasse oder Spachtelmasse.

## Claims

1. A cement-based composition comprising per 100 parts by weight of cement from 1 to 500 parts by weight of an emulsion polymer built up from
a) 30 - 99.5% by weight of at least one alkyl ester of (meth)acrylic acid,
b) 0 - 70% by weight of at least one vinylaromatic,
c) 0.5 - 10% by weight of at least one alkyl polyethoxy(meth)acrylate of the formula 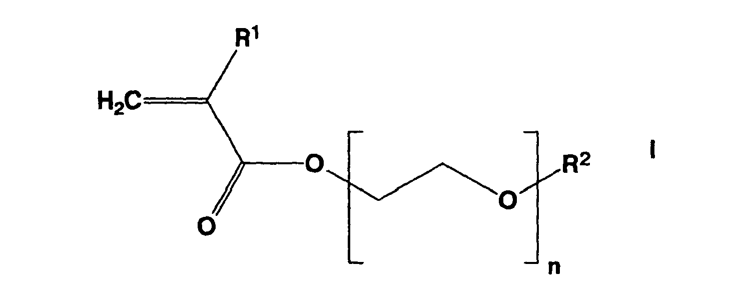 where R¹ is a hydrogen atom or a methyl group, R² is a C₁ to C₄ alkyl group and n is an integer from 1 to 55,
d) 0 - 10% by weight of at least one ethylenically unsaturated mono- or dicarboxylic acid or anhydride, amide or hydroxyalkylamide thereof,
e) 0 - 10% by weight of acrylonitrile or methacrylonitrile, and
f) 0 - 50% by weight of further ethylenically unsaturated compounds other than a) to e), wherein ionic and/or nonionic emulsifiers are used in the emulsion polymerization.

2. The composition according to claim 1, wherein R² in formula I is methyl and n is an integer from 5 to 50.

3. The composition according to either of claims 1 and 2, comprising per 100 parts by weight of polymer from 0.1 to 20 parts by weight of an alkoxylated emulsifier.

4. The composition according to any of claims 1 to 3, wherein the glass transition temperature (Tg) of said polymer is from -60 to +30°C.

5. The composition according to any of claims 1 to 4, wherein said polymer is in the form of a powder.

6. The composition according to any of claims 1 to 5 in the form of a water-redispersible powder.

7. The use of a composition according to any of claims 1 to 6 as a repair mortar, reinforcing mortar, tile adhesive, sealant, coating composition or filler.

## Revendications

1. Compositions à base de ciment, contenant 1 à 500 parties en poids, par rapport à 100 parties en poids de ciment, d'un polymère en émulsion constitué
a) de 30 à 99,5 % en poids d'au moins un ester alkylique de l'acide (méth)acrylique,
b) de 0 à 70 % en poids d'au moins une substance vinyl-aromatique,
c) de 0,5 à 10 % en poids d'au moins un polyéthoxy(méth)acrylate d'alkyle de la formule : 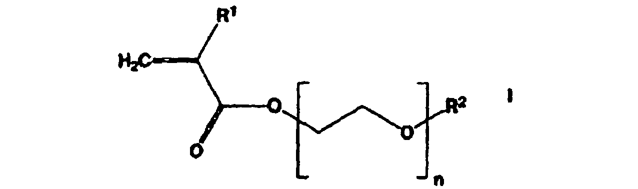
dans laquelle R¹ représente un atome de H ou un groupe méthyle, R² un groupe alkyle en C1-C4 et n un nombre entier de 1 à 55,
d) de 0 à 10 % en poids d'au moins un acide monocarboxylique ou dicarboxylique éthyléniquement insaturé, de ses anhydrides, amides ou hydroxyalkylamides,
e) de 0 à 10 % en poids d'acrylonitrile ou de méthacrylonitrile, et
f) de 0 à 50 % en poids d'autres composés éthyléniquement insaturés, différents de a) à e),
**caractérisées en ce que**, lors de la polymérisation en émulsion, des agents émulsionnants ioniques et/ou non ioniques sont mis en oeuvre.

2. Composition suivant la revendication 1, **caractérisée en ce que**, dans la formule I, R² représente du méthyle et n un nombre entier de 5 à 50.

3. Composition suivant l'une des revendications 1 et 2, **caractérisée en ce que** la composition contient 0,1 à 20 parties en poids, par rapport à 100 parties en poids de polymère, d'un agent émulsionnant alcoxylé.

4. Composition suivant l'une des revendications 1 à 3, **caractérisée en ce que** la température de transition vitreuse (Tg) du polymère est de -60 à +30°C.

5. Composition suivant l'une des revendications 1 à 4, **caractérisée en ce que** le polymère se présente sous la forme d'une poudre.

6. Composition suivant l'une des revendications 1 à 5, **caractérisée en ce qu'**il s'agit d'une poudre redispersable dans l'eau.

7. Utilisation des compositions suivant l'une des revendications 1 à 6, comme mortier de réparation ou d'armature, comme colle pour carreaux, masse d'étanchéification, masse d'enduction ou masse de masticage.
